# EUROPÄISCHE PATENTSCHRIFT

(11) **EP 1 897 729 B1**
(45) Veröffentlichungstag und Bekanntmachung des Hinweises auf die Patenterteilung: **05.03.2014**
(21) Anmeldenummer: 07015448.9
(22) Anmeldetag: 07.08.2007
(51) Int. Cl.: B60J 7/12

(54) **Bewegliches Fahrzeugdach**
Moveable vehicle roof
Toit de véhicule mobile

(30) Priorität: 08.09.2006 DE 102006042294
(43) Veröffentlichungstag der Anmeldung: 12.03.2008
(73) Patentinhaber: Dr. Ing. h.c. F. Porsche AG, 70435 Stuttgart (DE)
(72) Erfinder: Beierl, Dominik, 70825 Korntal-Münchingen (DE); Erb, Thiemo Adolf, Dr., 70182 Stuttgart (DE)

(56) Entgegenhaltungen:
- DE-A1- 10 259 482
- DE-C- 734 382

## Beschreibung

Die Erfindung betrifft ein bewegliches Fahrzeugdach mit einer Mehrzahl von relative zueinander bewegbaren, insbesondere verschiebbaren und/oder zueinander verschwenkbaren Segmenten, von denen wenigstens eine einen Kern bestehend aus einer Hohlräume bildenden Füllstruktur aufweist.

Wenn in diesem Zusammenhang von einem beweglichen Fahrzeugdach gesprochen wird, so sind damit sogenannte "Retractable hardtops" (RHT) als auch klassische Cabriolet-Fahrzeuge umfaßt, die als Dachaußenhaut zumindest bereichsweise eine flexible Verdeckbespannung aufweisen. Mischformen dieser beiden beweglichen Fahrzeugdachformen sind denkbar, beispielsweise ein bewegliches Fahrzeugdach, das teilweise aus festen Dachteilen und teilweise aus von einer flexiblen Dachhaut überspannten Bereichen besteht.

Darüber hinaus ist ein Fahrzeugdach aus der 10259482 bekannt.

Aus DE 10 2004 009 080 A1 ist es bekannt, einen akustischen Absorber als Segment in einem beweglichen Fahrzeugdach vorzusehen. Dieser akustische Absorber dient als Vorrichtung zur Dämpfung von Schallwellen in einem Fahrzeugdach und besteht vorzugsweise aus einer Wabenstruktur, beispielsweise einer Papierwabenstruktur.

Darüber hinaus ist es bereits bekannt geworden, flächige Elemente, die eine Dachhaut untergreifen, bereichsweise zu polstern oder mit sonstigen konturbildenden Stützelementen zu versehen.

Der Erfindung liegt die Aufgabe zugrunde, ein bewegliches Fahrzeugdach mit den Merkmalen des Oberbegriffes des Anspruches 1 derart auszubilden, daß es auf einfache Weise und preisgünstig herstellbar ist, verbesserte Dämpfungseigenschaften aufweist, die Formgestaltung der Fahrzeugdachkontur nicht eingeschränkt ist und eine integrale Ausgestaltung des flächigen Dachelementes zusammen mit an dem Verdeckgestell angrenzenden Halteteilen gebildet wird. Diese Aufgabe wird durch die kennzeichnenden Merkmale des Anspruches 1 gelöst, vorteilhafte Weiterbildungen ergeben sich aus den Unteransprüchen 2-12.

Die Verfahrensansprüche befassen sich mit einer besonders wirtschaftlichen und zielgerichteten Herstellung des vorbezeichneten beweglichen Fahrzeugdaches.

Gemäß der Erfindung wird zunächst ein Abschnitt eines Füllstrukturkerns vorgesehen, der zumindest einseitig, vorzugsweise aber auf beiden Seiten mit ihn bereichsweise umgreifenden Halteteilen, insbesondere flächigen Decklage versehen ist, an denen einstückig seitliche Elemente angebracht sind, die als Schnittstelle zum eigentlichen Verdeckgestell dienen. Auf diese Weise werden integrierte Plattenteile geschaffen, die hochbelastbar sind, gute Dämpfungseigenschaften haben, ein relativ geringes Gewicht aufweisen und bei denen Kräfte, die vom Verdeckgestell eingeleitet werden, flächig in den Füllstrukturkern übertragen werden. Dies basiert auf der integralen und insbesondere einstückigen Anbindung des Halteteils und dessen Übergang in den Füllstrukturkern, der in vorteilhafter Weise als Papierwabenkern ausgebildet sein kann. Dieser Kern kann unterschiedlichste Konturformen haben, es ist möglich, ihn vorher in Form zu pressen und/oder die endgültige Formgebung bei einem Gieß- oder Spritzvorgang vorzunehmen, bei welchem er mit den Decklagen versehen wird.

Das Halteteil übergreift den Füllstrukturkern wenigstens bereichsweise an Ober- und Unterseite, es besteht aus einer PUR-Matrix oder einem sonstigen Glasfasermaterial, das dem Fachmann auf dem Gebiet der Erfindung geeignet erscheint.

In weiterer Ausführungsform der Erfindung ist der Füllstrukturkern oder das flächige Halteteil an der dem Innenraum zugewandten Unterseite mit einem wenigstens einlagigen Innenhimmel versehen. Wenn in diesem Zusammenhang von "wenigstens einlagig" gesprochen wird, so ist damit umfaßt, daß zunächst an der Unterseite des Füllstrukturkerns oder Halteteils eine Zwischenschicht angeordnet sein kann, auf die dann der dem Benutzer sichtbare Innenhimmel (Innenhimmelschicht) aufgebracht ist. In der bevorzugten Ausführungsform ist die Zwischenlage eine weiche PE-Schaumlage mit einer Stärke von ca. 3 mm, der eigentliche Innenhimmel kann weit dünner ausgebildet sein und z. B. eine textile Struktur haben.

In einer weiteren Ausführungsform ist der Füllstrukturkern bzw. die nach außen gerichtete Seite des Halteteils mit einer elastischen Stützschicht, insbesondere einer Schaumschicht oder dergleichen verbunden, um ein gleichmäßiges Abstützen einer textilen oder sonstigen Dachhaut sicher zu stellen.

In üblicher Weise kann die Fahrzeugdachhaut, die von dem flächigen, durch die Füllstruktur gebildeten Element unterstützt wird, an dem flächigen Element befestigt werden.

Was das Verfahren gemäß den Ansprüchen 11 und 12 anbelangt, so ist vorgesehen, daß zunächst ein Abschnitt einer Papierwabenstruktur bereitgestellt wird, der in eine passende Größe geschnitten oder gestanzt wird. Sodann erfolgt ein zumindest bereichsweises Umspritzen oder Umgießen des Abschnittes der Papierwabenstruktur unter Bildung des Halteteils, wobei seitliche Bereiche des Halteteils nach Art von Lenkern oder Streben zu einer Schnittstelle des Verdeckgestells übergehen.

Schließlich wird wenigstens eine Lage eines Innenhimmels an der zum Innenraum weisenden Oberfläche des Halteteils oder der Papierwabenstruktur angebracht. Der durch ein seitliches Element des Halteteils ausgebildete Lenker muß so ausgebildet sein, daß das daran angeordnete flächige Teil bei der Dachöffnungs- und Schließbewegung entsprechend gesteuert werden kann.

In Weiterbildung des Verfahrens wird vorgesehen, daß auch auf der Außen/Oberseite des flächigen Elementes eine elastische Außenschicht angebracht wird, die zur elastischen und gleichmäßigen Unterstützung einer flexiblen Dachhaut dient.

Die Erfindung ist anhand von Ausführungsbeispielen näher erläutert. Diese zeigen
- Fig. 1: schematische Schnittdarstellung eines Dachsegmentes mit Teilen des Verdeckgestells;

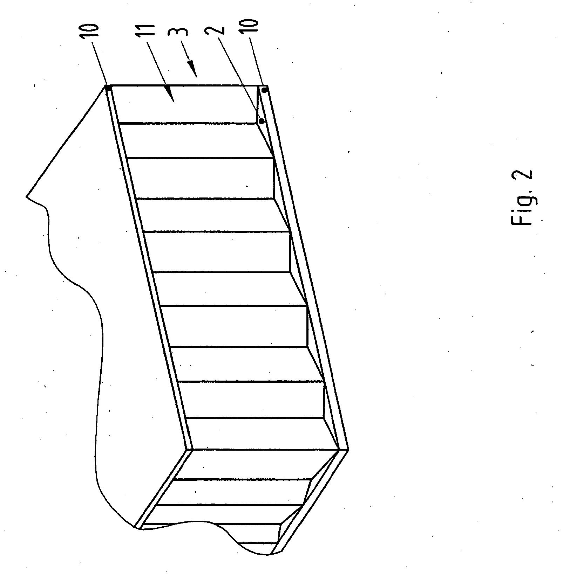

- Fig. 2: schematische Darstellung der Füllstruktur und Teilen des Halteteils.

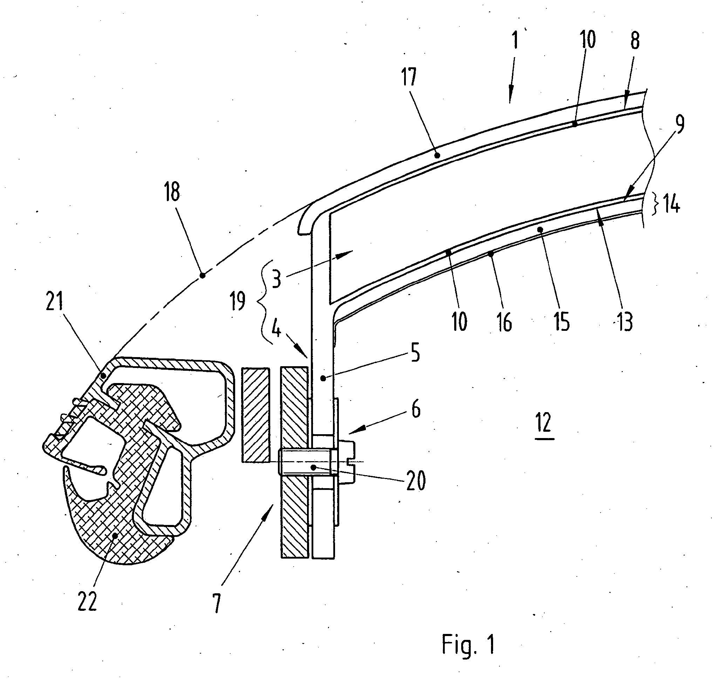

Figur 1 zeigt ein im Schnitt dargestelltes Dachsegment 1, das zu einer Mehrzahl von relativ zueinander bewegbaren, insbesondere verschiebbaren und/oder verschwenkbaren Segmenten 1 eines beweglichen Fahrzeugdaches gehört. Wenigstens eines der Dachsegmente 1 weist einen Kern bestehend aus einer Hohlräume 2 bildenden Füllstruktur 3. Dabei ist der Füllstrukturkern 3 mit einem ihn zumindest einseitig bereichsweise umgreifenden Halteteil 4 versehen, das mit einstückig daran angeordneten seitlichen Elementen 5 wenigstens eine Schnittstelle 6 zum Verdeckgestell 7 bildet.

In der in Zeichnungsfigur 1 dargestellten Ausführungsform umgreift das Halteteil 4 den Füllstrukturkern 3 sowohl an der Oberseite 8 als auch an der Unterseite 9. Vorzugsweise ist das Halteteil 4 formgebend mit dem Füllstrukturkern 3 verbunden, insbesondere verpreßt und/oder vergossen und bildet an dem Füllstrukturkern 3 wenigstens bereichsweise eine Decklage 10. Dies geht insbesondere aus Zeichnungsfigur 2 hervor. Dort ist der Füllstrukturkern 3 als Papierwabenstruktur 11 dargestellt und es ist deutlich erkennbar, wie Bereiche des Halteteils 4 die Oberseite 8 und die Unterseite 9 des Füllstrukturkerns 3 in Folge des Verpressens oder Vergießens in den Hohlräume des Füllstrukturkerns 3 eine stoffschlüssige Verbindung eingehen und eine ober- und unterseitige Decklage 10 bilden. Das Halteteil 4 kann dabei aus einer PUR-Matrix und/oder aus Glasfasermatten bestehen.

An der dem Fahrzeuginnenraum 12 zugewandten Oberfläche 13 des Füllstrukturkerns 3 und/oder des Halteteils 4 ist wenigstens ein einlagiger Innenhimmelabschnitt 14 angeordnet. In der in Zeichnungsfigur 1 dargestellten Ausführungsform besteht der Innenhimmelabschnitt 14 aus zwei Lagen, nämlich aus einer einen weichen PE-Schaum umfassenden Zwischenschicht 15 und einer aus einem textilen Material gefertigten abschließenden Innenhimmelschicht 16. Lediglich die Innenhimmelschicht 16 ist für den Fahrgast aus dem Innenraum sichtbar und kann beispielsweise auch aus anderen Materialien wie Leder oder Kunststoff gefertigt sein.

An der dem Innenhimmelabschnitt 14 gegenüberliegenden Oberfläche des Dachsegmentes 1, also der bei geschlossenem Verdeck nach außen gerichteten Seite, ist der Füllstrukturkern 3 mit einer elastischen Stützschicht 17 versehen. Eine derartige Stützschicht 17 ist insbesondere dann vorteilhaft, wenn ein flexibles Fahrzeugdach vorgesehen ist, das eine flexible Dachhaut 18 aufweist, und diese von flächigen Stützelementen 19, die aus den Dachsegmenten 1 gebildet sind, abgestützt werden. Dies bedeutet, daß die erfindungsgemäßen Dachsegmente 1, die den Füllstrukturkern 3 und den daran angebundenen Halteteilen 4 aufweisen, ein flächiges Stützelement 19 für eine flexible Fahrzeugdachhaut 18 bilden. Dabei ist die Fahrzeugdachhaut 18 zumindest bereichsweise an wenigstens einem der Stützelemente 19 befestigt.

Die elastische Stützschicht 17 dient einerseits der schonenden Abstützung der Fahrzeugdachhaut 18 und andererseits wird ermöglicht unabhängig von der Form der Außenkontur des Füllstrukturkerns 3 eine definierte Form der Fahrzeugdachhaut 18 bei geschlossenem Fahrzeugdach zu gewährleisten.

Die Schnittstelle 6 zwischen dem seitlichen Element 5 und dem Verdeckgestell 7 soll wenigstens eine gelenkige Verbindung umfassen, diese kann beispielsweise durch eine zumindest zu einem Verbindungspartner drehbeweglich gelagerte Schraube 20 realisiert werden.

Wie ebenfalls aus Zeichnungsfigur 1 ersichtlich, ist die Fahrzeugdachhaut 18 endseitig an seitlichen Dachrahmenteilen 21 des Verdeckgestells 7 angebunden. Das seitliche Dachrahmenteil 21 weist ein Dichtelement 22 auf, das zur Abdichtung von Seitenscheiben dient.

### Bezugszeichenliste

- 1: Segment
- 2: Hohlraum
- 3: Füllstruktur
- 4: Halteteil
- 5: seitliches Element
- 6: Schnittstelle
- 7: Verdeckgestell
- 8: Oberseite von 3
- 9: Unterseite von 3
- 10: Decklage
- 11: Papierwabenstruktur
- 12: Fahrzeuginnenraum
- 13: Oberfläche
- 14: Innenhimmelabschnitt
- 15: Zwischenschicht
- 16: Innenhimmelschicht
- 17: Stützschicht
- 18: Fahrzeugdachhaut
- 19: Stützelement
- 20: Schraube
- 21: Dachrahmenteil
- 22: Dichtelement

## Patentansprüche

1. Bewegliches Fahrzeugdach mit einer Mehrzahl von relativ zueinander bewegbaren, insbesondere verschiebbaren und/oder verschwenkbaren Segmenten (1), von denen wenigstens eines einen Kern bestehend aus einer Hohlräume (2) bildenden Füllstruktur (3) aufweist, **dadurch gekennzeichnet, dass** ein Abschnitt des Füllstrukturkerns (3) vorgesehen ist, der zumindest einseitig, vorzugsweise aber auf beiden Seiten, mit einem ihn bereichweise umgreifenden Halteteil (4) in Form einer flächigen Decklage (10) versehen ist, wobei das Halteteil (14) mit einstückig daran angeordneten seitlichen Elementen (5) wenigstens eine Schnittstelle (6) zum Verdeckgestell (7) bildet.

2. Bewegliches Fahrzeugdach nach Anspruch 1, **dadurch gekennzeichnet, dass** das Halteteil (4) den Füllstrukturkern (3) mindestens bereichsweise an der Ober- (8) und Unterseite (9) übergreift.

3. Bewegliches Fahrzeugdach nach einem der vorhergehenden Ansprüche, **dadurch gekennzeichnet, dass** das Halteteil (4) formgebend mit dem Füllstrukturkern (3) verbunden, insbesondere verpreßt und/oder vergossen ist und an dem Füllstrukturkern (3) wenigstens bereichsweise eine Decklage (10) bildet.

4. Bewegliches Fahrzeugdach nach einem der Ansprüche 1 - 3, **dadurch gekennzeichnet, dass** das Halteteil (4) aus einer PUR-Matrix und/oder Glasfasermatten besteht.

5. Bewegliches Fahrzeugdach nach einem der Ansprüche 1 - 4, **dadurch gekennzeichnet, dass** der Füllstrukturkern (3) aus einer Papierwabenstruktur (11) besteht.

6. Bewegliches Fahrzeugdach nach einem der vorhergehenden Ansprüche, **dadurch gekennzeichnet, dass** an dem Füllstrukturkern (3) oder dem Halteteil (4) an der dem Fahrzeuginnenraum (12) zugewandten Oberfläche (13) ein wenigstens einlagiger Innenhimmelabschnitt (14) angeordnet ist.

7. Bewegliches Fahrzeugdach nach einem der vorhergehenden Ansprüche, **dadurch gekennzeichnet, dass** der Füllstrukturkern (3) an der bei geschlossenem Verdeck nach außen gerichteten Seite mit einer elastischen Stützschicht (17) versehen ist.

8. Bewegliches Fahrzeugdach nach einem der vorhergehenden Ansprüche, **dadurch gekennzeichnet, dass** die Schnittstelle (6) zwischen dem seitliche Element (5) und dem Verdeckgestell (7) eine gelenkige Verbindung umfaßt.

9. Bewegliches Fahrzeugdach nach einem der vorhergehenden Ansprüche, **dadurch gekennzeichnet, dass** der Füllstrukturkern (3) zusammen mit dem Halteteil (4) ein flächiges Stützelement (19) für eine flexible Fahrzeugdachhaut (18) bildet.

10. Bewegliches Fahrzeugdach nach Anspruch 9, **dadurch gekennzeichnet, dass** die Fahrzeugdachhaut (18) zumindest bereichsweise an wenigstens einem Stützelement (19) befestigt ist.

11. Verfahren zur Herstellung eines beweglichen mehrschaligen Fahrzeugdaches nach Anspruch 1, mit folgenden Verfahrensschritten:
Bereitstellen eines Abschnittes einer Papierwabenstruktur;
Formgebendes zumindest bereichsweises Umspritzen und/oder Umgießen des Abschnittes der Papierwabenstruktur unter Bildung eines Halteteils, wobei seitliche Bereiche des Halteteils in eine Schnittstelle zu einem Verdeckgestell übergehen;
Flächiges Anbringen wenigstens einer Lage an der zum Innenraum weisenden Oberfläche des Halteteils und/oder der Papierwabenstruktur.

12. Verfahren zur Herstellung eines beweglichen mehrsegmentigen Fahrzeugdaches nach Anspruch 11, **dadurch gekennzeichnet, dass** das Fahrzeugdach mit einem dieses überspannenden flexiblen Verdeckbezug bespannt wird und der Verdeckbezug zumindest bereichsweise von mindestens einem Segment wenigstens phasenweise abgestützt wird.

## Claims

1. Movable vehicle roof with a plurality of segments (1) which are movable relative to one another, in particular are displaceable and/or pivotable, and of which at least one has a core comprising a filling structure (3) forming cavities (2), **characterized in that** a section of the filling structure core (3) is provided, said filling structure core being provided with a retaining part (4), in the form of a sheet-like top layer (10), which engages around it in some regions at least on one side, but preferably on both sides, wherein the retaining part (4), together with lateral elements (5) arranged on it as a single piece, forms at least one intersecting point (6) with the top framework (7).

2. Movable vehicle roof according to Claim 1, **characterized in that** the retaining part (4) engages over the filling structure core (3) at least in some regions on the upper side (8) and lower side (9).

3. Movable vehicle roof according to one of the preceding claims, **characterized in that** the retaining part (4) is connected to the filling structure core (3) in a shaping manner, in particular is pressed onto it and/or cast into it, and forms a top layer (10) at least in some regions on the filling structure core (3).

4. Movable vehicle roof according to one of Claims 1 - 3, **characterized in that** the retaining part (4) comprises a polyurethane matrix and/or glass fiber mats.

5. Movable vehicle roof according to one of Claims 1 - 4, **characterized in that** the filling structure core (3) comprises a paper honeycomb structure (11).

6. Movable vehicle roof according to one of the preceding claims, **characterized in that** an at least single-layer inside headlining section (14) is arranged on the filling structure core (3) or the retaining part (4), on the surface (13) which faces the vehicle interior (12).

7. Movable vehicle roof according to one of the preceding claims, **characterized in that** the filling structure core (3) is provided with an elastic supporting layer (17) on the side which is directed outward when the top is closed.

8. Movable vehicle roof according to one of the preceding claims, **characterized in that** the intersecting point (6) between the lateral element (5) and the top framework (7) comprises an articulated connection.

9. Movable vehicle roof according to one of the preceding claims, **characterized in that** the filling structure core (3) together with the retaining part (4) forms a sheet-like supporting element (19) for a flexible vehicle roof skin (18).

10. Movable vehicle roof according to Claim 9, **characterized in that** the vehicle roof skin (18) is fastened at least in some regions to at least one supporting element (19).

11. Method for producing a movable multi-shell vehicle roof according to Claim 1, with the following method steps:
- preparing a section of a paper honeycomb structure;
- encapsulating the section of the paper honeycomb structure at least in some regions by injection molding and/or casting for shaping purposes, with a retaining part being formed, and with lateral regions of the retaining part merging into an intersecting point with a top framework;
- applying at least one layer in a sheet-like manner to that surface of the retaining part and/or the paper honeycomb structure which faces the interior.

12. Method for producing a movable multi-segment vehicle roof according to Claim 11, **characterized in that** the vehicle roof is covered by a flexible top cloth spanning it, and the top cloth is supported at least in some regions by at least one segment at least in a phasewise manner.

## Revendications

1. Toit de véhicule mobile doté d'une pluralité de segments (1) mobiles les uns par rapport aux autres pouvant notamment être coulissés et/ou pivotés, parmi lesquels au moins un segment comporte un coeur composé d'une structure de remplissage (3) formant des espaces creux (2), **caractérisé en ce qu'**une section du coeur de structure de remplissage (3) prévue est pourvue au moins d'un côté, de préférence sur les deux côtés, d'une partie de maintien (4) l'enserrant au moins sur certaines zones sous la forme d'une couche de revêtement (10) plate, la partie de maintien (4) formant, avec des éléments (5) latéraux disposés d'un seul tenant contre, au moins une interface (6) par rapport au châssis de capote (7).

2. Toit de véhicule mobile selon la revendication 1, **caractérisé en ce que** la partie de maintien (4) enserre le coeur de structure de remplissage (3) au moins sur certaines zones au niveau du côté supérieur (8) et du côté inférieur (9).

3. Toit de véhicule mobile selon l'une quelconque des revendications précédentes, **caractérisé en ce que** la partie de maintien (4) est reliée, notamment comprimée et/ou coulée, avec le coeur de structure de remplissage (3), de façon à lui donner sa forme et forme une couche de revêtement (10) au niveau du coeur de structure de remplissage (3) au moins sur certaines zones.

4. Toit de véhicule mobile selon l'une quelconque des revendications 1 à 3, **caractérisé en ce que** la partie de maintien (4) se compose d'une matrice PUR et/ou de nattes en fibres de verre.

5. Toit de véhicule mobile selon l'une quelconque des revendications 1 à 4, **caractérisé en ce que** le coeur de structure de remplissage (3) se compose d'une structure alvéolaire (11).

6. Toit de véhicule mobile selon l'une quelconque des revendications précédentes, **caractérisé en ce qu'**une section de garniture intérieure (14) au moins monocouche est disposée au niveau du coeur de structure de remplissage (3) ou de la partie de maintien (4) prévue au niveau de la surface (13) orientée vers l'habitacle de véhicule (12).

7. Toit de véhicule mobile selon l'une quelconque des revendications précédentes, **caractérisé en ce que** le coeur de structure de remplissage (3) est pourvu d'une couche d'appui (17) élastique au niveau du côté orienté vers l'extérieur lorsque la capote est fermée.

8. Toit de véhicule mobile selon l'une quelconque des revendications précédentes, **caractérisé en ce que** l'interface (6) comprend une liaison articulée entre l'élément latéral (5) et le châssis de capote (7).

9. Toit de véhicule mobile selon l'une quelconque des revendications précédentes, **caractérisé en ce que** le coeur de structure de remplissage (3) forme, conjointement avec la partie de maintien (4), un élément d'appui (19) plat pour une couverture de toit de véhicule flexible (18).

10. Toit de véhicule mobile selon la revendication 9, **caractérisé en ce que** la couverture de toit de véhicule (18) est fixée au moins sur certaines zones à au moins un élément d'appui (19).

11. Procédé de fabrication d'un toit de véhicule mobile à plusieurs couches selon la revendication 1, avec les étapes de procédé suivantes :
mise à disposition d'une section de structure alvéolaire ;
injection et/ou coulage, avec formage sur au moins certaines sections, de la section de la structure alvéolaire par formation d'une partie de maintien, les zones latérales de la partie de maintien se transformant en une interface avec le châssis de capote ;
mise à plat d'au moins une couche au niveau de la surface de la partie de maintien et/ou de la structure alvéolaire orientée vers l'habitacle.

12. Procédé de fabrication d'un toit de véhicule mobile à plusieurs segments selon la revendication 11, **caractérisé en ce que** le toit de véhicule est tendu au moyen d'un revêtement de capote flexible couvrant et que le revêtement de capote est soutenu au moins sur certaines zones par au moins un segment.
